# EUROPEAN PATENT APPLICATION

(11) **EP 4 641 148 A1**
(43) Date of publication of application: **29.10.2025**
(21) Application number: 25170925.9
(22) Date of filing: 16.04.2025
(51) Int. Cl.: G01G 23/00

(54) **SYSTEM AND METHOD FOR DIGITAL SEALING OF WEIGHING SCALES, IN PARTICULAR INDUSTRIAL SCALES**

(30) Priority: 22.04.2024 IT 202400009067
(71) Applicant: Metricode S.r.l., 41011 Campogalliano (MO) (IT)
(72) Inventor: BONACINI, Paolo, 42018 SAN MARTINO IN RIO RE (IT); PIETRI, Damiano, 41011 CAMPOGALLIANO MO (IT)
(74) Representative: Modiano, Micaela Nadia

(57) **Abstract**

A system (20) for the digital sealing of weighing scales, particularly industrial scales, comprising at least one weighing scale (21), an interface device (24), and a sealing device (28), wherein the weighing scale (21) comprises at least one load receptor (22) and a weight indicator (23), wherein the weighing scale (21) is operatively connected to the interface device (24), and wherein the interface device (24) and the sealing device (28) are mutually connected via a telematic communication network (26).

The weight indicator (23) of the weighing scale (21) is configured to generate a digital sealing request for the weighing scale (21), the request comprising a set of information items.

The sealing device (28) is configured to generate a digital seal for the weighing scale (21), in response to the request, the digital seal comprising the information set.

The interface device (24) is configured to load the digital seal into the weighing scale (21).

The weight indicator (23) of the weighing scale (21) is further configured to verify the digital seal on the basis of the information set, validating the digital seal if the verification is successful.

## Description

The present invention relates to a system and method for digital sealing of weighing scales, particularly industrial or professional scales.

The system and method according to the present invention are particularly, but not exclusively, useful and practical in the field of operations for calibration and/or maintenance of weighing scales used in industry, for example in the chemical, pharmaceutical, food, construction industries, and so on.

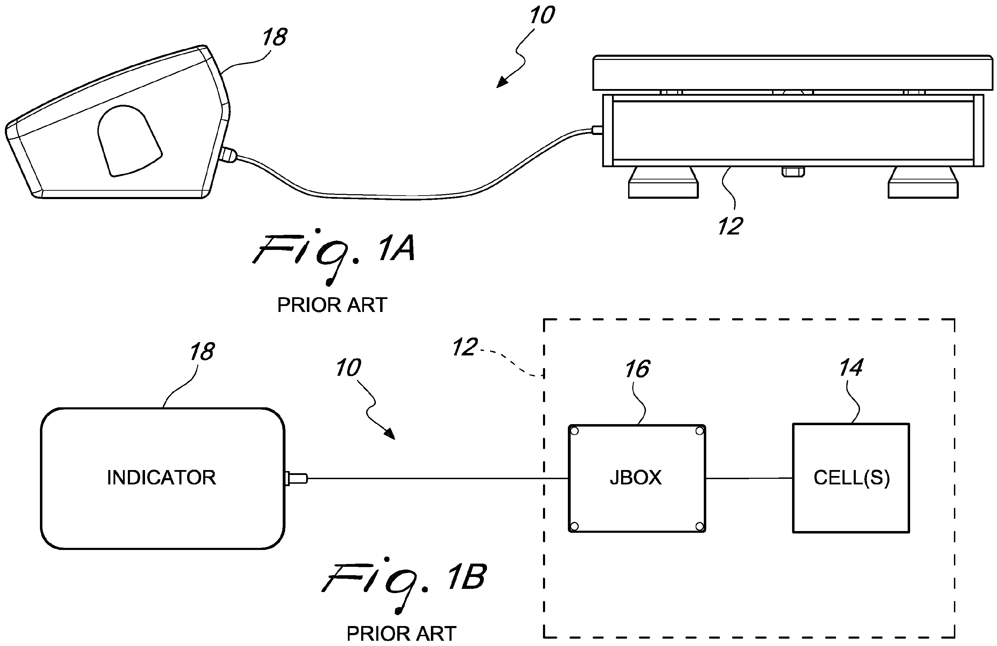

With reference to Figures 1A and 1B, generally, a weighing scale 10 of a known type comprises at least one load receptor 12 and a weight indicator 18. Typically, the load receptor 12 is a weighing platform. The load receptor 12 is operatively connected to the weight indicator 18, for example by means of direct wiring.

In practice, to simplify, a user places an object to be weighed on the load receptor 12, the load receptor 12 measures the weight of the object and transmits the measured value to the weight indicator 18, and finally the weight indicator 18 shows or displays the measured value of the weight of the object.

In detail, generally, the load receptor 12 of a weighing scale 10 of a known type comprises one or more load cells 14 and a junction box 16. For example, the load cells 14 may be of the digital type or of the analog type. The load cells 14 of the load receptor 12 are operatively connected to the junction box 16 of said load receptor 12. The junction box 16 of the load receptor 12 is operatively connected to the weight indicator 18, for example by means of direct wiring.

In practice, to simplify, a user places an object to be weighed on the load receptor 12, the load cells 14 of the load receptor 12 measure the weight of the object, the junction box 16 of the load receptor 12 transmits the measured value to the weight indicator 18, and finally the weight indicator 18 shows or displays the measured value of the weight of the object.

Normally, weighing scales 10 are subject to periodic metric conformity checks to verify their correct functioning and that they have not been tampered with.

Currently, following the initial calibration of a weighing scale 10, as well as after each recalibration and/or maintenance operation, for example if the periodic check reveals a malfunction, a verification technician affixes physical seals on the weight indicator 18 of the weighing scale 10 and especially on the junction box 16 of the load receptor 12.

In detail, these physical seals are self-adhesive tamper-resistant seals, the removal of which from the junction box 16 and/or the weight indicator 18 causes them to break, thus preventing their reuse.

Therefore, these physical seals, and consequently these operations for sealing the weighing scales 10, are intended to ensure the metrological conformity of said weighing scales 10, and consequently to preserve their correct operation.

However, these sealing solutions of a known type, in short physical sealing, have certain drawbacks.

One drawback of the known solutions resides in that the verification technician must be at the same location as a weighing scale 10 in order to be able to affix physical seals to the weighing scale 10 when necessary, for example following an operation for recalibration and/or maintenance of the weighing scale 10.

Another drawback of known solutions resides in that the records of the various sealing operations of the weighing scales 10 are made manually by the verification technician, and therefore these records may be incomplete (lack of certain information) or even absent due to distraction or haste on the part of the verification technician.

A further drawback of known solutions resides in that the physical seals can be tampered with by malicious individuals. In practice, a malicious individual could tamper with a weighing scale 10 and affix false physical seals to fake the metrological conformity of said weighing scale 10.

The aim of the present invention is to overcome the limitations of the background art described above by devising a system and method for digitally sealing weighing scales, particularly industrial scales, which allow to achieve better results than obtainable with known solutions and/or similar results at a lower cost and with higher performance.

Within the scope of this aim, an object of the present invention is to conceive a system and method for digitally sealing weighing scales, particularly industrial scales, which allow the sealing operations of weighing scales to be carried out remotely.

Another object of the present invention is to devise a system and method for digitally sealing weighing scales, particularly industrial scales, which allow the sealing operations of weighing scales to be traced.

A further object of the present invention is to conceive a system and method for digitally sealing weighing scales, particularly industrial scales, which allow the sealing operations of weighing scales to be standardized.

Furthermore, an object of the present invention is to devise a system and method for digitally sealing weighing scales, particularly industrial scales, which allow the sealing operations of weighing scales to be non-repudiable.

Not least object of the present invention is to provide a system and method for digitally sealing weighing scales, particularly industrial scales, which are highly reliable, relatively simple to provide, and economically competitive when compared to the prior art.

This aim, as well as these and other objects that will become better apparent hereinafter, are achieved by a digital sealing system for weighing scales, particularly industrial scales, according to claim 1.

The intended aim and objects are also achieved by a method for digitally sealing weighing scales, particularly industrial scales, according to claim 8.

Further characteristics and advantages of the present invention will become better apparent from the description of a preferred but not exclusive embodiment of the system and method for digitally sealing weighing scales, particularly industrial scales, according to the invention, illustrated by way of non-limiting example in the accompanying drawings, wherein:
Figures 1A and 1B are respectively an elevation view and a block diagram showing an embodiment of a weighing scale, particularly an industrial scale, of a known type;
Figure 2 is a block diagram which shows schematically an embodiment of the digital sealing system for weighing scales, particularly industrial scales, according to the present invention;
Figure 3 is a flowchart which shows schematically an embodiment of the method for digitally sealing weighing scales, particularly industrial scales, according to the present invention.

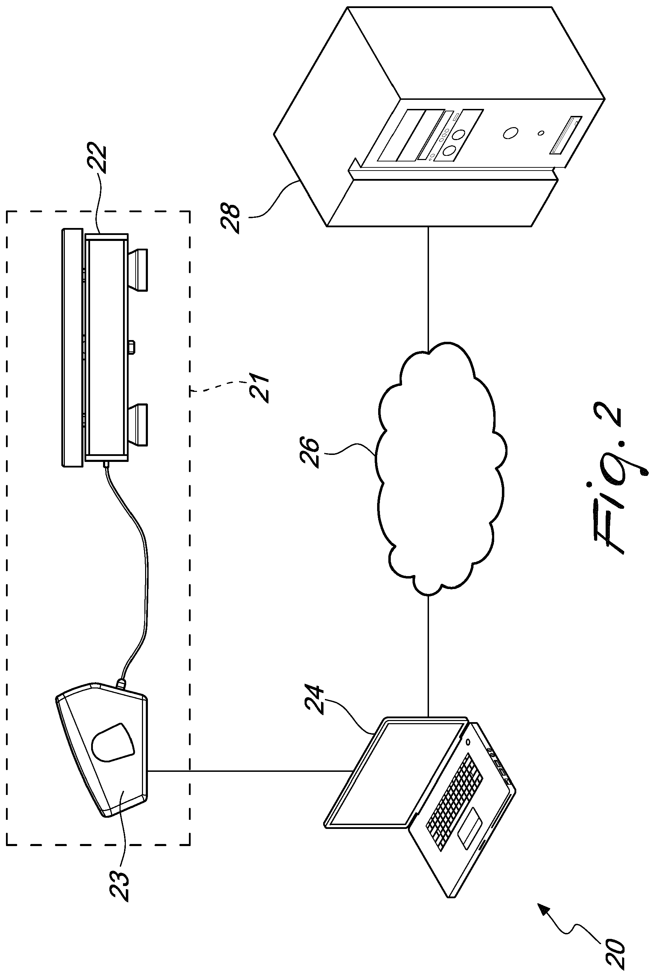

With reference to Figure 2, the system for the digital sealing of weighing scales according to the present invention, generally designated by the reference numeral 20, substantially comprises at least one weighing scale 21, in particular an industrial or professional weighing scale, an interface device 24, and a sealing device 28. The weighing scale 21 comprises at least one load receptor 22 and a weight indicator 23.

The weighing scale 21, in particular its weight indicator 23, is operatively connected to the interface device 24, for example by means of direct wiring or via an internal company communication network (intranet).

The interface device 24 and the sealing device 28 are mutually connected and communicate via a telematic communication network 26, for example the Internet.

As mentioned, the weighing scale 21 comprises at least one load receptor 22 and a weight indicator 23. The weighing scale 21, in particular the associated load receptor 22, may comprise one or more load cells. The load cells 14 may be of a digital or analog type. Preferably, the weighing scale 21 is a digital or electric scale.

The interface device 24 is operated by a user/operator and is configured to allow said user/operator to interface with the weighing scale 21, in particular with the associated weight indicator 23, particularly but not exclusively during the digital sealing operation.

For example, the interface device 24 may be a personal computer of the desktop or notebook type, as shown in Figure 2, but also a tablet or smartphone.

The interface device 24 may comprise a processor, a memory, and user interface means. The sealing device 28 may comprise a processor and a memory.

The weight indicator 23 of the weighing scale 21 is configured to generate a request for a new digital seal for said weighing scale 21 to be digitally sealed. For example, the weight indicator 23 of the weighing scale 21 can generate the request for a digital seal following an appropriate command given by a user/operator operating the interface device 24.

The digital seal request, generated by the weight indicator 23 of the weighing scale 21, comprises a set of information items, which preferably includes metrological information relating to the weighing scale 21 to be digitally sealed.

The digital seal request may comprise a serial number of the weighing scale 21 to be digitally sealed.

The digital seal request may comprise an identification code for the request and thus for the digital seal. This identification code is randomly generated by the weight indicator 23 of the weighing scale 21. This identification code is valid only once, in a manner similar to a one-time password (OTP).

The digital seal request may comprise the configuration parameters of the weighing scale 21 to be digitally sealed.

The digital seal request may comprise a checksum of the configuration parameters of the weighing scale 21 to be digitally sealed. This checksum is calculated by the weight indicator 23 of the weighing scale 21 on the basis of the configuration parameters of said weighing scale 21 to be digitally sealed.

Advantageously, the digital seal request, generated by the weight indicator 23 of the weighing scale 21, may comprise a combination of the information described above. For example, the digital seal request may comprise: the serial number of the weighing scale 21 to be digitally sealed; the identification code of the request, and therefore of the digital seal; and the checksum of the configuration parameters of the weighing scale 21 to be digitally sealed. Also for example, the digital seal request may comprise: the serial number of the weighing scale 21 to be digitally sealed; the identification code of the request, and therefore of the digital seal; and the configuration parameters of the weighing scale 21 to be digitally sealed.

The interface device 24 is configured to receive the request for the new digital seal that originates from the weight indicator 23 of the weighing scale 21. The interface device 24 is further configured to send the request for the new digital seal toward the sealing device 28.

The sealing device 28 is configured to generate the new digital seal for the weighing scale 21 to be digitally sealed, after receiving, and thus in response to, the digital seal request that arrives from the interface device 24. For example, the sealing device 28 can generate the digital seal in a suitable file format.

The digital seal, generated by the sealing device 28, comprises a set of information items derived from the digital seal request that arrives from the interface device 24.

The digital seal may comprise the serial number of the weighing scale 21 to be digitally sealed, comprised in the digital seal request that arrives from the interface device 24.

The digital seal may comprise the identification code of the digital seal, and therefore of the request, comprised in the digital seal request that arrives from the interface device 24.

The digital seal may comprise the configuration parameters of the weighing scale 21 to be digitally sealed, comprised in the digital seal request that arrives from the interface device 24.

The digital seal may comprise the checksum of the configuration parameters of the weighing scale 21 to be digitally sealed, comprised in the digital seal request that arrives from the interface device 24.

Advantageously, the digital seal, generated by the sealing device 28, may comprise a combination of the information described above. For example, the digital seal may comprise: the serial number of the weighing scale 21 to be digitally sealed; the identification code of the request, and therefore of the digital seal; and the checksum of the configuration parameters of the weighing scale 21 to be digitally sealed. Also for example, the digital seal may comprise: the serial number of the weighing scale 21 to be digitally sealed; the identification code of the request, and therefore of the digital seal; and the configuration parameters of the weighing scale 21 to be digitally sealed.

Preferably, the digital seal, generated by the sealing device 28, further comprises one or more of the following information items: the manufacturer of the weighing scale 21 to be digitally sealed; the user/operator who initiated the digital sealing operation; and the date and time of generation of the digital seal.

Preferably, the sealing device 28 is further configured to encrypt the new digital seal with asymmetric encryption, in particular by applying a digital signature to the digital seal itself with a private key, for example with a PGP (Pretty Good Privacy) digital signature. In this case, the digital seal, generated by the sealing device 28, further comprises the digital signature.

The sealing device 28 is further configured to send the new digital seal toward the interface device 24. The interface device 24 is further configured to receive the new digital seal that originates from the sealing device 28.

The interface device 24 is further configured to load the new digital seal, that originates from the sealing device 28, into the weighing scale 21 to be digitally sealed, in particular into the corresponding weight indicator 23, for example into a memory comprised in said weight indicator 23. For example, the interface device 24 can load the digital seal following an appropriate command given by a user/operator operating said interface device 24.

The weight indicator 23 of the weighing scale 21 is further configured to verify the new digital seal, after it has been loaded into said weighing scale 21 to be digitally sealed, on the basis of the information set comprised in the digital seal itself. If this verification is successful, the weight indicator 23 of the weighing scale 21 is further configured to validate the new digital seal.

The weight indicator 23 of the weighing scale 21 can verify that the serial number of the weighing scale 21 comprised in the digital seal loaded into the weighing scale 21 is equal to the actual serial number of the weighing scale 21 in which the digital seal has been loaded.

The weight indicator 23 of the weighing scale 21 can verify that the identification code of the digital seal loaded into the weighing scale 21 is equal to the identification code of the corresponding digital seal request previously generated by the same weight indicator 23.

The weight indicator 23 of the weighing scale 21 can verify that the checksum of the configuration parameters of the weighing scale 21 comprised in the digital seal loaded into the weighing scale 21 is equal to the actual checksum of the configuration parameters of the weighing scale 21 in which the digital seal has been loaded.

Preferably, the weight indicator 23 of the weighing scale 21 can decode the digital seal loaded into the weighing scale 21 with asymmetric encryption, in particular by verifying the digital signature of said digital seal with a public key.

Advantageously, the weight indicator 23 of the weighing scale 21 can perform all the verifications described above, i.e., the weight indicator 23 verifies: the serial number of the weighing scale 21 to be digitally sealed; the identification code of the digital seal, and therefore of the request; the checksum of the configuration parameters of the weighing scale 21 to be digitally sealed; and the digital signature of the digital seal.

Advantageously, the weight indicator 23 of the weighing scale 21 is further configured to register the new digital seal, loaded into the weighing scale 21 and subsequently validated (positive result of the verification), for example into a memory comprised in said weight indicator 23.

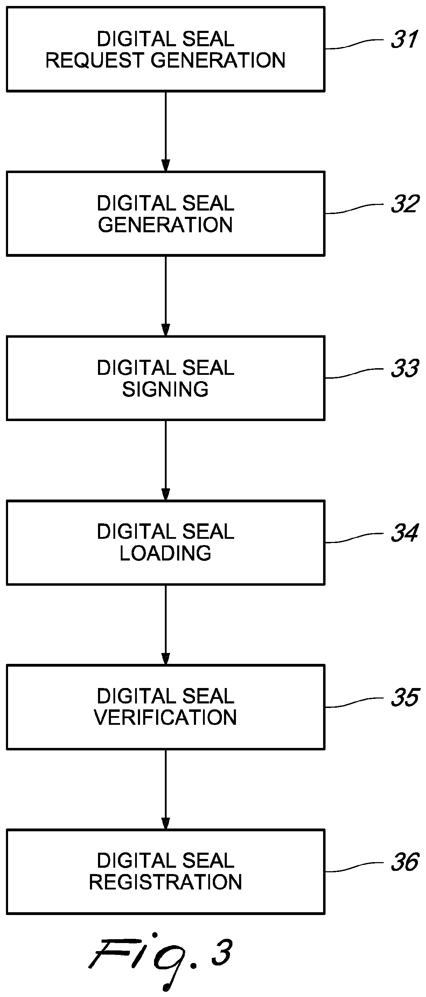

With reference to Figure 3, the method for the digital sealing of weighing scales, particularly industrial scales, according to the present invention comprises the steps described below.

Initially, in step 31, the weight indicator 23 of the weighing scale 21 generates a request for a new digital seal for said weighing scale 21 to be digitally sealed. For example, the weight indicator 23 of the weighing scale 21 can generate the digital seal request following an appropriate command given by a user/operator operating the interface device 24.

As mentioned, advantageously, the digital seal request, generated by the weight indicator 23 of the weighing scale 21, may comprise a combination of the information described above. For example, the digital seal request may comprise: the serial number of the weighing scale 21 to be digitally sealed; the identification code of the request, and therefore of the digital seal; and the checksum of the configuration parameters of the weighing scale 21 to be digitally sealed. Also for example, the digital seal request may comprise: the serial number of the weighing scale 21 to be digitally sealed; the identification code of the request, and therefore of the digital seal; and the configuration parameters of the weighing scale 21 to be digitally sealed.

Also in step 31, the interface device 24 receives the request for the new digital seal that originates from the weight indicator 23 of the weighing scale 21. Also in step 31, the interface device 24 sends the request for the new digital seal toward the sealing device 28.

In step 32, the sealing device 28 generates the new digital seal for the weighing scale 21 to be digitally sealed after receiving, and thus in response to, the request for a digital seal that arrives from the interface device 24. For example, the sealing device 28 can generate the digital seal in a suitable file format.

As mentioned, advantageously, the digital seal, generated by the sealing device 28, may comprise a combination of the information described above. For example, the digital seal may comprise: the serial number of the weighing scale 21 to be digitally sealed; the identification code of the digital seal, and therefore of the request; and the checksum of the configuration parameters of the weighing scale 21 to be digitally sealed. Also for example, the digital seal may comprise: the serial number of the weighing scale 21 to be digitally sealed; the identification code of the request, and therefore of the digital seal; and the configuration parameters of the weighing scale 21 to be digitally sealed.

As mentioned, preferably, the digital seal, generated by the sealing device 28, further comprises one or more of the following items of information: the manufacturer of the weighing scale 21 to be digitally sealed; the user/operator who initiated the digital sealing operation; and the date and time of generation of the digital seal.

Preferably, in step 33, the sealing device 28 encrypts the new digital seal using asymmetric encryption, in particular by applying a digital signature to said digital seal with a private key, for example with a PGP (Pretty Good Privacy) digital signature. In this case, the digital seal, generated by the sealing device 28, further comprises the digital signature.

Also in step 32, or also in step 33 in the case of a digital signature, the sealing device 28 sends the new digital seal toward the interface device 24.

In step 34, the interface device 24 receives the new digital seal that originates from the sealing device 28.

Also in step 34, the interface device 24 loads the new digital seal that originates from the sealing device 28 into the weighing scale 21 to be digitally sealed, in particular into the corresponding weight indicator 23, for example into a memory comprised in said weight indicator 23. For example, the interface device 24 can load the digital seal following an appropriate command issued by a user/operator who operates said interface device 24.

In step 35, the weight indicator 23 of the weighing scale 21 verifies the new digital seal after it has been loaded into said weighing scale 21 to be digitally sealed. If this verification is successful, the weight indicator 23 of the weighing scale 21 validates the new digital seal.

Advantageously, in step 35, the weight indicator 23 of the weighing scale 21 can perform all the verifications described above, i.e., the weight indicator 23 verifies: the serial number of the weighing scale 21 to be digitally sealed; the identification code of the digital seal, and therefore of the request; the checksum of the configuration parameters of the weighing scale 21 to be digitally sealed; and the digital signature of the digital seal.

Advantageously, in step 36, the weight indicator 23 of the weighing scale 21 records the new digital seal, loaded into the weighing scale 21 in step 34 and subsequently validated (positive verification outcome) in step 35, for example into a memory comprised in said weight indicator 23.

In practice it has been found that the present invention fully achieves the intended aim and objects. In particular, it has been shown that the system and method for the digital sealing of weighing scales thus conceived allows to overcome the qualitative limitations of the background art, since it makes it possible to obtain better effects than obtainable with known solutions and/or similar effects at a lower cost and with higher performance.

Although the system and method for the digital sealing of weighing scales according to the invention have been conceived in particular for industrial or professional scales, i.e. those used in industry, they may nevertheless be used more generally for weighing scales of any type.

The invention thus conceived is susceptible of numerous modifications and variations, all of which are within the scope of the accompanying claims.

Unless otherwise indicated, the various embodiments described above may be combined to provide additional and/or alternative embodiments. Moreover, the present description covers combinations of preferred variations and embodiments that are not explicitly described.

All the details may furthermore be replaced with other technically equivalent elements.

In practice, the materials used, so long as they are compatible with the specific use, as well as the contingent shapes and dimensions, may be any according to the requirements and the state of the art.

To conclude, the scope of the protection of the claims must not be limited by the illustrations or preferred embodiments shown in the description by way of example, but rather the claims must comprise all the characteristics of patentable novelty that reside in the present invention, including all the characteristics that would be treated as equivalents by the person skilled in the art.

The disclosures in Italian Patent Application no. 102024000009067, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system (20) for the digital sealing of weighing scales, particularly industrial scales, comprising at least one weighing scale (21), an interface device (24), and a sealing device (28), said weighing scale (21) comprising at least one load receptor (22) and a weight indicator (23), said weighing scale (21) being operatively connected to said interface device (24), said interface device (24) and said sealing device (28) being mutually connected via a telematic communication network (26);
wherein said weight indicator (23) of said weighing scale (21) is configured to generate a digital sealing request for said weighing scale (21), said request comprising a set of information items;
wherein said sealing device (28) is configured to generate a digital seal for said weighing scale (21), in response to said request, said digital seal comprising said information set;
wherein said interface device (24) is configured to load said digital seal into said weighing scale (21); and
wherein said weight indicator (23) of said weighing scale (21) is further configured to verify said digital seal on the basis of said information set, validating said digital seal if the verification is successful.

2. The system (20) for the digital sealing of weighing scales according to claim 1, wherein said information set of said digital seal request and said digital seal comprises a serial number of said weighing scale (21); and
wherein said weight indicator (23) of said weighing scale (21) is configured to verify that said serial number comprised in said digital seal is equal to a serial number of said weighing scale (21) in which said digital seal has been loaded.

3. The system (20) for the digital sealing of weighing scales according to claim 1 or 2, wherein said information set of said digital seal request and said digital seal comprises an identification code of said request, and therefore of said digital seal; and
wherein said weight indicator (23) of said weighing scale (21) is configured to verify that said identification code of said digital seal is equal to said identification code of said digital seal request.

4. The system (20) for the digital sealing of weighing scales according to any one of the preceding claims, wherein said information set of said digital seal request and said digital seal comprises configuration parameters of said weighing scale (21); and
wherein said weight indicator (23) of said weighing scale (21) is configured to verify that said configuration parameters of said weighing scale (21) comprised in said digital seal are equal to configuration parameters of said weighing scale (21) into which said digital seal has been loaded.

5. The system (20) for the digital sealing of weighing scales according to any one of the preceding claims, wherein said information set of said digital seal request and said digital seal comprises a checksum of configuration parameters of said weighing scale (21); and
wherein said weight indicator (23) of said weighing scale (21) is configured to verify that said checksum of configuration parameters of said weighing scale (21) comprised in said digital seal is equal to a checksum of configuration parameters of said weighing scale (21) into which said digital seal has been loaded.

6. The system (20) for the digital sealing of weighing scales according to any one of the preceding claims, wherein said sealing device (28) is further configured to encrypt said digital seal with asymmetric encryption by applying a digital signature to said digital seal with a private key; and
wherein said weight indicator (23) of said weighing scale (21) is further configured to decode said digital seal with asymmetric encryption, verifying said digital signature of said digital seal with a public key.

7. The system (20) for the digital sealing of weighing scales according to any one of the preceding claims, wherein said weight indicator (23) of said weighing scale (21) is further configured to register said digital seal, loaded into said weighing scale (21) and subsequently validated.

8. A method for digitally sealing weighing scales, particularly industrial scales, by means of at least one weighing scale (21), an interface device (24), and a sealing device (28), said weighing scale (21) comprising at least one load receptor (22) and a weight indicator (23), said weighing scale (21) being operatively connected to said interface device (24), said interface device (24) and said sealing device (28) being mutually connected via a telematic communication network (26);
wherein said method comprises the steps of:
- generating (31) a digital seal request for said weighing scale (21), via said weight indicator (23) of said weighing scale (21), said request comprising a set of information items;
- generating (32) a digital seal for said weighing scale (21), in response to said request, via said sealing device (28), said digital seal comprising said information set;
- loading (34) said digital seal into said weighing scale (21), via said interface device (24); and
- verifying (35) said digital seal on the basis of said information set, via said weight indicator (23) of said weighing scale (21), validating said digital seal if the verification is successful.

9. The method for digitally sealing weighing scales according to claim 8, wherein said information set of said digital seal request and said digital seal comprises a serial number of said weighing scale (21); and
wherein said method comprises the step that consists in verifying (35) that said serial number comprised in said digital seal is equal to a serial number of said weighing scale (21) in which said digital seal has been loaded, via said weight indicator (23) of said weighing scale (21).

10. The method for digitally sealing weighing scales according to claim 8 or 9, wherein said information set of said digital seal request and said digital seal comprises an identification code of said request, and therefore of said digital seal; and
wherein said method comprises the step that consists in verifying (35) that said identification code of said digital seal is equal to said identification code of said digital seal request, via said weight indicator (23) of said weighing scale (21).

11. The method for digitally sealing weighing scales according to any one of claims 8 to 10, wherein said information set of said digital seal request and said digital seal comprises configuration parameters of said weighing scale (21); and
wherein said method comprises the step that consists in verifying (35) that said configuration parameters of said weighing scale (21) comprised in said digital seal are equal to configuration parameters of said weighing scale (21) in which said digital seal has been loaded, via said weight indicator (23) of said weighing scale (21).

12. The method for digitally sealing weighing scales according to any one of claims 8 to 11, wherein said information set of said digital seal request and said digital seal comprises a checksum of configuration parameters of said weighing scale (21); and
wherein said method comprises the step that consists in verifying (35) that said checksum of configuration parameters of said weighing scale (21) comprised in said digital seal is equal to a checksum of configuration parameters of said weighing scale (21) in which said digital seal has been loaded, via said weight indicator (23) of said weighing scale (21).

13. The method for digitally sealing weighing scales according to any one of claims 8 to 12, wherein said method further comprises the steps that consist in:
- encrypting (33) said digital seal with asymmetric encryption by applying a digital signature to said digital seal with a private key, via said sealing device (28); and
- decrypting (35) said digital seal with asymmetric encryption, verifying said digital signature of said digital seal with a public key, via said weight indicator (23) of said weighing scale (21).

14. The method for digitally sealing weighing scales according to any one of claims 8 to 13, wherein said method further comprises the step that consists in registering (36) said digital seal, loaded into said weighing scale (21) and subsequently validated, via said weight indicator (23) of said weighing scale (21).
